# EUROPEAN PATENT SPECIFICATION

(11) **EP 4 400 329 B1**
(45) Date of publication and mention of the grant of the patent: **14.01.2026**
(21) Application number: 22864129.6
(22) Date of filing: 28.07.2022
(51) Int. Cl.: B60C 9/02, B29D 30/30, B29D 30/16, B29D 30/42

(54) **TIRE AND METHOD FOR MANUFACTURING TIRE**
REIFEN UND VERFAHREN ZUR HERSTELLUNG EINES REIFENS
PNEU ET PROCÉDÉ DE FABRICATION DE PNEU

(30) Priority: 06.09.2021 JP 2021145048
(43) Date of publication of application: 17.07.2024
(73) Proprietor: BRIDGESTONE CORPORATION, Chuo-ku Tokyo 104-8340 (JP)
(72) Inventor: ASANO Yuji, Tokyo 104-8340 (JP)
(74) Representative: Marks & Clerk LLP
(86) International application number: PCT/JP2022/029196
(87) International publication number: WO 2023/032541

(56) References cited:
- EP-A1- 3 135 468
- EP-A1- 3 135 468
- WO-A1-99/24244
- JP-A- 2013 071 368
- JP-A- 2013 075 505
- JP-A- 2014 043 022
- JP-A- 2018 118 605
- JP-A- H05 154 938
- JP-A- S5 561 441
- JP-A- S6 398 424
- US-A1- 2005 092 416
- US-A1- 2015 251 495

## Description

### TECHNICAL FIELD

This disclosure relates to a tire and a tire production method.

### BACKGROUND

In recent years, in order to improve the dimensional accuracy of tires, a production method for pneumatic tires has been proposed that involves a raw tire forming process, in which a raw tire is formed by using a rigid core with an outer shape similar to that of the tire lumen after vulcanization, and sequentially attaching unvulcanized tire components such as carcass plies and belt plies on the outer surface of the rigid core.

For example, Patent Document 1 proposes to form a carcass ply by sequentially attaching tapes with a width of 10 to 50 mm in the tire circumferential direction. Since the method by attaching is easy as a production process, tires with high dimensional accuracy can be produced with high productivity according to Patent Document 1.

### CITATION LIST

### Patent Literature

PTL 1: JP 2014/043022 A1
PTL 2 : EP 3 135 468 A1.

### SUMMARY

### (Technical Problem)

However, in the method described in Patent Document 1, the above tapes are attached so that they do not overlap at the tire equatorial plane, but overlap at the end portions of the carcass ply. Thus, there was a possibility of appearance defects (unevenness on the surface) and vibrations on the tire surface due to overlapping at the end portions of the carcass ply. In addition, since the relatively wide tapes with a width of 10 to 50 mm are used and the rigidity of each tape is high, it is difficult to attach the tapes while following the angular variation with positions in the tire width direction caused by the crown curvature of the tire. Therefore, even when it was desired to vary the angle of the carcass ply in the tire width direction, it was difficult to produce such a variation.

Therefore, it is an object of the present disclosure to provide a tire with reduced appearance defects and vibrations on the tire surface; and a tire production method that can produce a tire with reduced appearance defects and vibrations on the tire surface, and can form a carcass ply with a varying angle of inclination with respect to the tire circumferential direction in the tire width direction.

### (Solution to Problem)

The gist structure of the present disclosure is as follows.
(1) A tire comprising a pair of bead portions, and
   one or more carcass plies straddling between the pair of bead portions in a toroidal shape, wherein
   the carcass ply is comprised of tape-like members arranged in the tire circumferential direction, in which a plurality of carcass cords arranged parallel to each other are coated with rubber,
   the tape-like member has a tape width of 1 to 10 mm,
   on the tire equatorial plane, two of the tape-like members adjacent to each other in the tire circumferential direction are butted against each other at tire circumferential ends thereof, and
      at the end portions of the carcass ply, two of the tape-like members adjacent to each other in the tire circumferential direction overlap each other only at rubber portions thereof.
(2) A tire production method for a tire comprising a pair of bead portions and a carcass consisting of one or more carcass plies straddling between the pair of bead portions in a toroidal shape, wherein
   the method includes a raw tire forming process: using a toroidal-shaped rigid core with a tire forming surface that forms a luminal surface of the tire on its outer surface, and sequentially attaching unvulcanized tire components including carcass plies on the tire forming surface of the rigid core to form a raw tire,
   the raw tire forming process includes a carcass ply forming process: forming the carcass ply on the tire forming surface of the rigid core,
   the carcass ply forming process includes an attaching process: attaching tape-like members with a tape width of 1 to 10 mm, in which a plurality of carcass cords arranged parallel to each other are coated with rubber, sequentially in the tire circumferential direction to form a carcass ply comprised of the tape-like members arranged in the tire circumferential direction, and
   in the attaching process, on the tire equatorial plane, two of the tape-like members adjacent to each other in the tire circumferential direction are attached so that they are butted against each other at tire circumferential ends thereof, and at the end portions of the carcass ply, two of the tape-like members adjacent to each other in the tire circumferential direction are attached so that they overlap each other only at rubber portions thereof.

### (Advantageous Effect)

According to the present disclosure, it is possible to provide a tire with reduced appearance defects and vibrations on the tire surface; and a tire production method that can produce a tire with reduced appearance defects and vibrations on the tire surface, and can form a carcass ply with a varying angle of inclination with respect to the tire circumferential direction in the tire width direction.

### BRIEF DESCRIPTION OF THE DRAWINGS

In the accompanying drawings:
FIG. 1 is a schematic cross-sectional view in the tire width direction of the tire according to one embodiment of this disclosure;
FIG.2 is a schematic plan view of the carcass structure of the tire;
FIG. 3 illustrates the dimensions of the tape-like member;
FIG. 4A illustrates the dimensions related to the coating rubber on the tire equatorial plane;
FIG. 4B illustrates the dimensions related to the coating rubber at the end portion of the carcass ply;
FIG. 5 illustrates a schematic cross-sectional view of the tire and the rigid core;
FIG.6 is a schematic diagram for explaining the angle of the carcass ply; and
FIG 7 is a schematic diagram for explaining the width of the carcass ply.

### DETAILED DESCRIPTION

The following is a detailed illustration of the embodiment of this disclosure with reference to the drawings.

### <Tire>

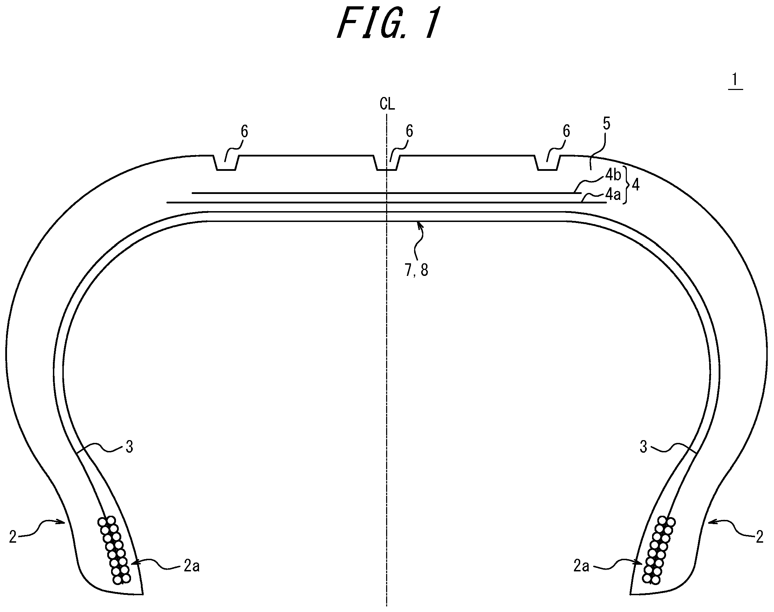

The following is a description of a tire in accordance with one embodiment of this disclosure. In this embodiment, the tire can be a pneumatic tire. Figure. 1 is a schematic cross-sectional view in the tire width direction of the tire according to one embodiment of this disclosure. As illustrated in Figure 1, the tire 1 comprises a pair of bead portions 2, a carcass 3 consisting of one or more carcass plies that straddle between the pair of bead portions 2 in a toroidal shape, a belt 4 disposed on the outer side of the crown portion of the carcass 3 in the tire radial direction, and a tread 5 disposed on the outer side of the belt 4 in the tire radial direction.

In the illustrated example, a bead core 2a is embedded in the bead portion 2. In this example, the bead core 2a is divided into two small bead cores in the tire width direction, but is not limited to this example.

In the illustrated example, the carcass 3 consists of one or more carcass plies. The carcass 3 straddles between the pair of bead portions 2 in a toroidal shape. In this example, the end portions of the carcass 3 is sandwiched between two small bead cores, but this is not the only case. The cord of the carcass ply can be an organic fiber cord, although it is not limited to any particular type. The number of carcass plies is also not particularly limited as long as it is one or more.

In the illustrated example, the belt 4 is an inclined belt, consisting of two belt layers 4a and 4b, with the belt cords extending across each other between the layers. The angle of the belt cords with respect to the tire circumferential direction is not limited, but can be 20° to 75°, for example. The number of belt layers is not limited as long as there is at least one layer. The material of the belt cords are not limited, but can be steel cords.

In the illustrated example, the tread 5 comprises one layer of tread rubber, but it can also be formed as a tread with multiple layers of rubber in the tire radial direction or the tire width direction. Also, in the illustrated example, three circumferential main grooves 6 are arranged in the tread 5, but the number of circumferential main grooves, groove width, groove depth, and groove shape are not limited.

In the illustrated example, an inner liner 8 is disposed on the tire inner surface 7. This prevents air and gas permeation.

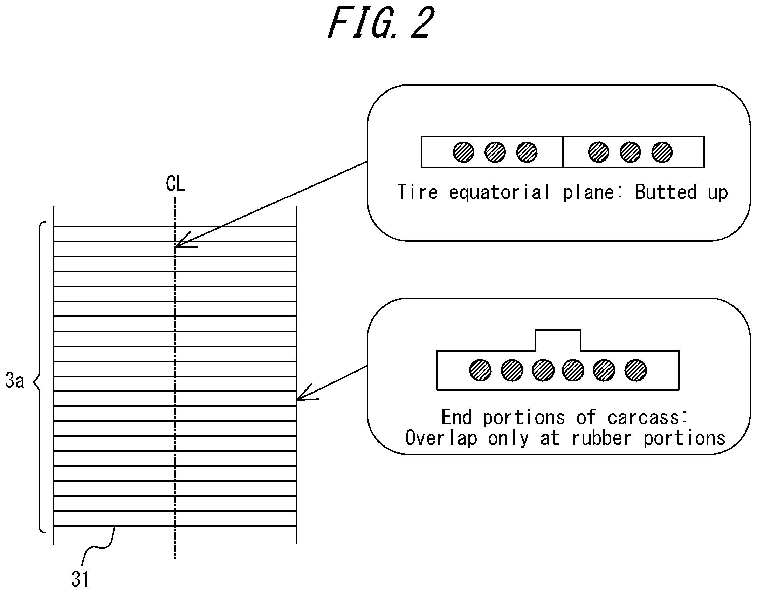

Figure 2 is a schematic plan view of the carcass structure of the tire according to this embodiment. As illustrated in Figure 2, in this embodiment, the carcass ply 3a is comprised of tape-like members 31 arranged in the tire circumferential direction, in which a plurality of belt cords (e.g., one to three) arranged parallel to each other are coated with rubber.

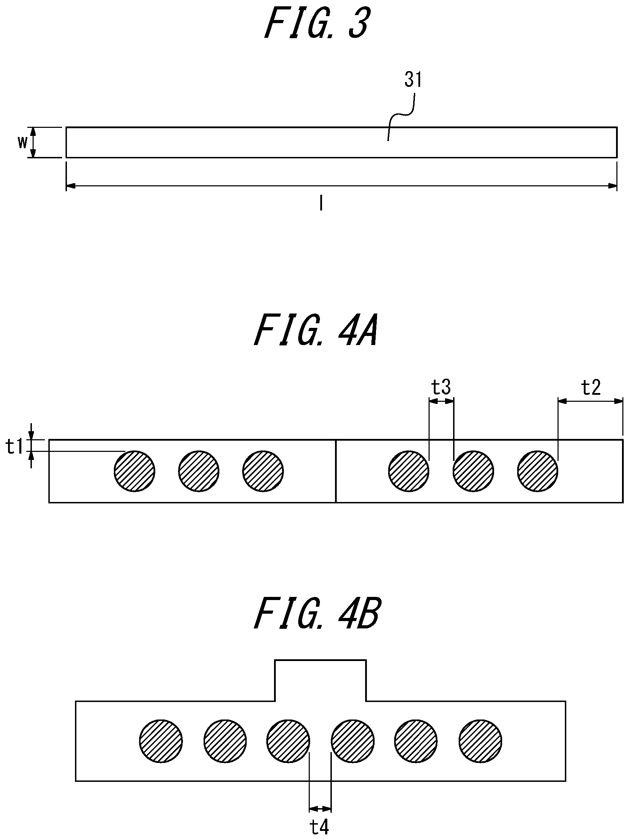

Figure. 3 illustrates the dimensions of the tape-like member. Referring to Figure 3, in this embodiment, the tape-like member 31 has a tape width w of 1 to 10 mm (preferably 2 to 8 mm). The length l of the tape-like member 31 in the longitudinal direction can be determined as appropriate depending on the length of the carcass in the extending direction.

As schematically illustrated in the enlarged view in Figure 2, on the tire equatorial plane CL, two of the tape-like members 31 adjacent to each other in the tire circumferential direction are butted against each other at tire circumferential ends thereof (e.g., when the tape-like members are most open between them (due to attaching variations)). In addition, at the end portions of the carcass ply, two of the tape-like members adjacent to each other in the tire circumferential direction overlap each other only at rubber portions thereof. In other words, the carcass cords do not overlap each other.

The following is an explanation of the effects of the tire according to this embodiment.

According to the tire of this embodiment, on the tire equatorial plane CL, two of the tape-like members 31 adjacent to each other in the tire circumferential direction are butted against each other at tire circumferential ends thereof, so that no gaps or bumps between them occur in the tire circumferential direction. Therefore, the appearance defects on the tire surface caused by those gaps and bumps can be suppressed. In addition, at the end portions of the carcass ply, two of the tape-like members 31 adjacent to each other in the tire circumferential direction overlap each other only at rubber portions thereof, so that there are no bumps caused by overlapping carcass cords. Also, since the overlap between the rubber portions is crushed and reduced, the appearance defects and vibrations on the tire surface caused by large bumps can be suppressed.

As described above, the tire of this embodiment can suppress appearance defects and vibrations on the tire surface.

Figure 4A illustrates the dimensions related to the coating rubber on the tire equatorial plane. Figure 4B illustrates the dimensions related to the coating rubber at the end portions of the carcass ply. As illustrated in Figure 4A, the thickness t1 of the coating rubber of the carcass ply is not limited, but can be 0.1 to 0.2 mm, for example. Also, the distance in the width direction of the tape-like member from the end of the outermost carcass cord among the plurality of carcass cords of the tape-like member to the end of the tape-like member (the width of the edge rubber portion) t2 can be determined according to the curvature of crown portion of the tire. That is, the tire usually has a difference in circumferential length, where the circumference at the tire equatorial plane is longer than the circumference at the end portions of the carcass ply due to the curvature of the crown portion. Therefore, as illustrated in Figure 2, when the tape-like members are butted against each other on the tire equatorial plane, the tape-like members will overlap each other at the end portions of the carcass ply due to the difference in circumferential length, however, it is desirable that the carcass cords do not overlap each other. For this purpose, it is preferable to secure a certain width t2, and the larger the difference in circumferential length, the larger t2 preferably be secured. Since it depends on the difference in circumferential length, t2 can be set to 0.3 to 2.0 mm, for example, although it is not particularly limited. The distance between cords (shortest distance) t3 is not limited, but can be 0.3 to 2.0 mm, for example. In addition, as illustrated in Figure 4B, it is more preferable that, at the end portions of the carcass ply, the shortest distance t4 between the carcass cords of two of the tape-like members adjacent to each other in the tire circumferential direction is 0 mm or more and 2 mm or less. By setting t4 to 0 mm or more, it is possible to prevent the carcass cords of two of the tape-like members adjacent to each other in the tire circumferential direction from overlapping at the end portions of the carcass ply. Also, by setting t4 to 2 mm or less, it is possible to ensure that there are no areas where the carcass cords are sparse when viewed in the tire circumferential direction.

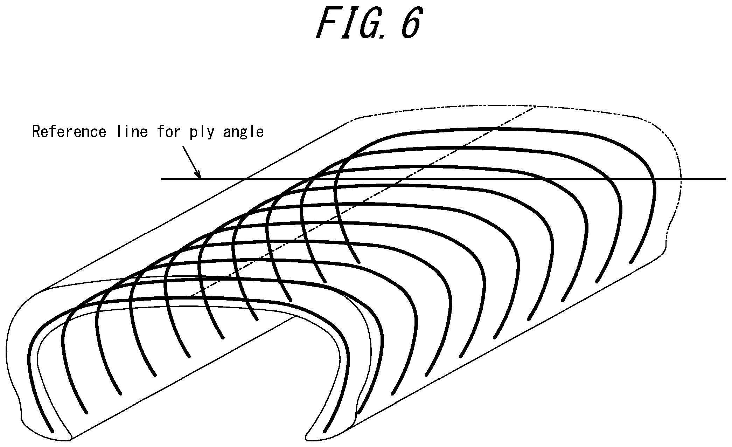

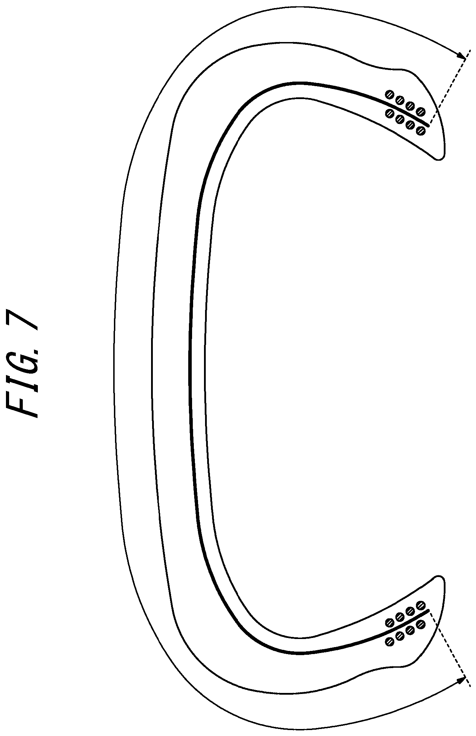

Here, as illustrated in Figure 6, when the line parallel to the tire width direction is used as a reference line, the carcass ply can be attached at a variable angle of -75 to 75° with respect to the reference line. Also, as illustrated in Figure 7, the end-to-end length of the carcass ply (distance along the way) is preferably at least 270 mm in an unloaded condition. In addition to that, the maximum width of the belt is preferably at least 100 mm in the unloaded condition.

For relatively large tires such as those described above, the difference in circumferential length is severe when trying to manufacture plies using tape-like members. Therefore, in the case of large tires as described above, according to the present disclosure, the gap between the tape-like members is eliminated, which is effective against the above problem.

### <Tire production method>

The following is a description of a tire production method in accordance with one embodiment of this disclosure. This tire production method is, in one example, a tire production method for the tire in accordance with the embodiment described above. As mentioned above, the tire comprises a pair of bead portions and a carcass consisting of one or more carcass plies straddling between the pair of bead portions in a toroidal shape. The other components and their details have already been described, so they will not be described again.

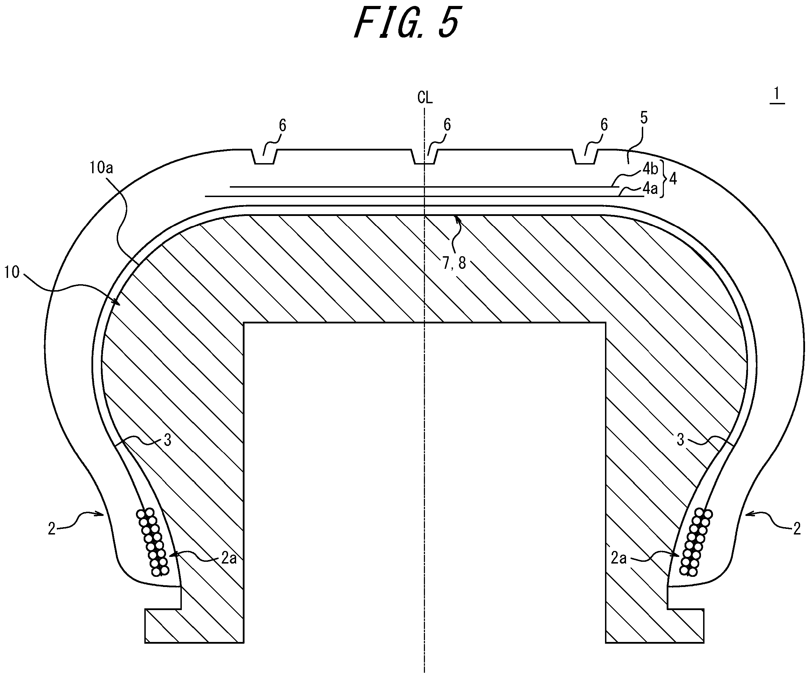

Figure 5 illustrates a schematic cross-sectional view of the tire and a rigid core. The tire production method of this embodiment uses a toroidal-shaped rigid core 10 with a tire forming surface 10a that forms a luminal surface of the tire on its surface, as illustrated in Figure 5. Then, a raw tire is formed by sequentially attaching unvulcanized tire components including carcass plies and belt plies on the tire forming surface 10a of the rigid core 10 (Raw tire forming process).

The above raw tire forming process includes a carcass ply forming process to form a carcass ply on the tire forming surface 10a of the rigid core 10 and a belt ply forming process to form a belt ply through the carcass ply.

In the above carcass ply forming process, the tape-like members 31 with a tape width of 1 to 10 mm (preferably 2 to 8 mm), in which a plurality of carcass cords arranged parallel to each other are coated with rubber, are sequentially attached on the tire forming surface 10a in the tire circumferential direction. This forms a carcass ply comprised of the tape-like members 31 arranged in the tire circumferential direction (Attaching process).

In the attaching process, as illustrated in Figure 2, on the tire equatorial plane CL, two of the tape-like members 31 adjacent to each other in the tire circumferential direction are attached so that they are butt against each other at tire circumferential ends thereof (e.g., when the tape-like members are most open between them (due to the attaching variations)). Also, in this embodiment, in the attaching process, at the end portions of the carcass ply, two of the tape-like members adjacent to each other in the tire circumferential direction are attached so that they overlap each other only at rubber portions thereof (i.e., the carcass cords are prevented from overlapping each other).

As mentioned above, a tire normally has a difference in circumferential length between at the tire equatorial plane and at the end portions of the carcass ply. Therefore, if two of the tape-like members 31 adjacent to each other in the tire circumferential direction on the tire equatorial plane are made to butt against each other at tire circumferential ends thereof, then two of the tape-like members adjacent to each other in the tire circumferential direction overlap at the end portions of the carcass ply. Here, by securing the width t2 of the edge rubber portion, only the rubber portions can overlap each other.

According to the tire production method of this embodiment, first, high productivity can be achieved because the tape-like members are easily attached in the production process. In addition, since the tape-like member with a tape width of 1 to 10 mm is used for attaching the tapes, the rigidity of the tape-like member is relatively low and it is possible to attach the tape following the angular variation with positions in the tire width direction caused by the crown curvature of the tire, and it is possible to form a carcass ply with a varying angle of inclination with respect to the tire circumferential direction in the tire width direction. Further, in the attaching process, on the tire equatorial plane, two of the tape-like members 31 adjacent to each other in the tire circumferential direction are attached so that they are butted against each other at tire circumferential ends thereof, thereby eliminating gaps or bumps between them in the tire circumferential direction. This prevents appearance defects and vibrations on the tire surface caused by the gaps and bumps. Furthermore, in the attaching process, at the end portions of the carcass ply, two of the tape-like members adjacent to each other in the tire circumferential direction are also attached so that they overlap each other only at rubber portions thereof (i.e., the carcass cords are prevented from overlapping each other), so that there are no bumps caused by overlapping carcass cords. Also, since the overlap between the rubber portions is crushed and reduced, the appearance defects and vibrations on the tire surface caused by large bumps can be suppressed.

As described above, the tire production method of this embodiment enables to obtain a tire with reduced appearance defects and vibrations on the tire surface while achieving high productivity, and to form a carcass ply with a varying angle of inclination with respect to the tire circumferential direction in the tire width direction.

Here, same as described in the tire embodiment, the tape-like member can have t1 of 0.1 to 0.2 mm for example, and t3 of 0.3 to 2.0 mm, for example. Also, the width t2 is not particularly limited because it depends on the difference in circumferential length, as described above, but can be 0.3 to 2.0 mm, for example. In addition, the tape-like members is preferably attached so that the shortest distance t4 between the carcass cords of two of the adjacent tape-like members in the tire circumferential direction at the end portions of the carcass ply is between 0 mm or more and 2 mm or less.

### REFERENCE SIGNS LIST

- 1: Tire
- 2: Bead portion
- 3: Carcass
- 4: Belt
- 5: Tread
- 6: Circumferential main groove
- 7: Tire inner surface
- 8: Inner liner
- 10: Rigid core

## Claims

1. A tire comprising a pair of bead portions, and
one or more carcass plies straddling between the pair of bead portions in a toroidal shape, wherein
the carcass ply is comprised of tape-like members arranged in the tire circumferential direction, in which a plurality of carcass cords arranged parallel to each other are coated with rubber,
the tape-like member has a tape width of 1 to 10 mm,
**characterised in that**;
on the tire equatorial plane, two of the tape-like members adjacent to each other in the tire circumferential direction are butted against each other at tire circumferential ends thereof, and
at the end portions of the carcass ply, two of the tape-like members adjacent to each other in the tire circumferential direction overlap each other only at rubber portions thereof.

2. The tire according to claim 1, wherein at the end portions of the carcass ply, carcass cords of two of the tape-like members adjacent to each other in the tire circumferential direction do not overlap each other.

3. A tire production method for a tire comprising a pair of bead portions and a carcass consisting of one or more carcass plies straddling between the pair of bead portions in a toroidal shape, wherein
the method includes a raw tire forming process: using a toroidal-shaped rigid core with a tire forming surface that forms a luminal surface of the tire on its outer surface, and sequentially attaching unvulcanized tire components including carcass plies on the tire forming surface of the rigid core to form a raw tire,
the raw tire forming process includes a carcass ply forming process: forming the carcass ply on the tire forming surface of the rigid core,
the carcass ply forming process includes an attaching process: attaching tape-like members with a tape width of 1 to 10 mm, in which a plurality of carcass cords arranged parallel to each other are coated with rubber, sequentially in the tire circumferential direction to form a carcass ply comprised of the tape-like members arranged in the tire circumferential direction, and
in the attaching process, on the tire equatorial plane, two of the tape-like members adjacent to each other in the tire circumferential direction are attached so that they are butted against each other at tire circumferential ends thereof, and **characterised in that**;
at the end portions of the carcass ply, two of the tape-like members adjacent to each other in the tire circumferential direction are attached so that they overlap each other only at rubber portions thereof.

4. The tire production method according to claim 3, wherein at the end portions of the carcass ply, carcass cords of two of the tape-like members adjacent to each other in the tire circumferential direction are prevented from overlapping each other.

## Patentansprüche

1. Reifen, der ein Paar von Wulstabschnitten umfasst, und
eine oder mehrere Karkassenlagen, die zwischen den beiden Wulstabschnitten in einer ringförmigen Form überspannen, wobei
die Karkassenlage aus in der Reifenumfangsrichtung eingerichteten Elementen besteht, in denen eine Vielzahl parallel zueinander eingerichteter Karkassenkorde mit Gummi beschichtet ist,
das bandartige Element eine Bandbreite von 1 bis 10 mm aufweist, **dadurch gekennzeichnet, dass**
auf der Äquatorialebene des Reifens zwei der bandartigen Elemente, die in der Reifenumfangsrichtung aneinandergrenzen, an ihren Reifenumfangsenden aneinander anliegen, und
an den Endabschnitten der Karkassenlage zwei der in Reifenumfangsrichtung aneinandergrenzenden bandartigen Elemente einander nur an ihren Gummiabschnitten überlappen.

2. Reifen nach Anspruch 1, wobei an den Endabschnitten der Karkassenlage die Karkassenkorde zweier in der Reifenumfangsrichtung aneinandergrenzender bandartiger Elemente einander nicht überlappen.

3. Reifenherstellungsverfahren für einen Reifen, der ein Paar von Wulstabschnitten und eine Karkasse umfasst, die aus einer oder mehreren Karkassenlagen besteht, die zwischen dem Paar von Wulstabschnitten in einer ringförmigen Form überspannen, wobei
das Verfahren einen Rohreifenformprozess einschließt: Verwenden eines ringförmigen starren Kerns mit einer Reifenbildungsoberfläche, die auf seiner Außenfläche eine luminale Oberfläche des Reifens bildet, und sequenzielles Anbringen unvulkanisierter Reifenkomponenten, einschließlich Karkassenlagen, auf der Reifenbildungsoberfläche des starren Kerns, um einen Rohreifen zu bilden,
der Rohreifenbildungsprozess einen Karkassenlagenbildungsprozess einschließt: Bilden der Karkassenlage auf der Reifenbildungsoberfläche des starren Kerns,
der Karkassenlagenbildungsprozess einen Anbringungsprozess einschließt: Anbringen bandförmiger Elemente mit einer Bandbreite von 1 bis 10 mm, bei denen eine Vielzahl parallel zueinander eingerichteter Karkassenkorde sequenziell in der Reifenumfangsrichtung mit Gummi beschichtet ist, um eine Karkassenlage zu bilden, die aus den in der Reifenumfangsrichtung eingerichteten bandartigen Elementen besteht, und
bei dem Anbringungsprozess auf der Äquatorialebene des Reifens zwei der bandartigen Elemente, die in Reifenumfangsrichtung aneinandergrenzen, derart angebracht sind, dass sie an ihren Reifenumfangsenden aneinander liegen, und **dadurch gekennzeichnet, dass**
an den Endabschnitten der Karkassenlage zwei der bandartigen Elemente in Reifenumfangsrichtung derart aneinandergrenzen, dass sie einander nur an ihren Gummiabschnitten überlappen.

4. Reifenherstellungsverfahren nach Anspruch 3, wobei an den Endabschnitten der Karkassenlage verhindert wird, dass die Karkassenkorde zweier in der Reifenumfangsrichtung aneinandergrenzender bandartiger Elemente einander überlappen.

## Revendications

1. Pneu comprenant une paire de parties de talon, et
une ou plusieurs plis de carcasse chevauchant la paire de parties de talon en forme toroïdale, dans lequel
le pli de carcasse est composé d'éléments en forme de bande agencés dans la direction circonférentielle du pneu, dans lesquels une pluralité de câbles de carcasse agencés parallèlement les uns aux autres sont recouverts de caoutchouc,
l'élément en forme de bande présente une largeur de bande allant de 1 à 10 mm, **caractérisé en ce que** :
sur le plan équatorial du pneu, deux des éléments en forme de bande adjacents l'un à l'autre dans la direction circonférentielle du pneu sont en butée l'un contre l'autre au niveau des extrémités circonférentielles du pneu, et
au niveau des parties d'extrémités du pli de carcasse, deux des éléments en forme de bande adjacents l'un à l'autre dans la direction circonférentielle du pneu se chevauchent uniquement au niveau des parties en caoutchouc de ceux-ci.

2. Pneu selon la revendication 1, dans lequel, au niveau des parties d'extrémités du pli de carcasse, des câbles de carcasse de deux des éléments en forme de bande adjacents l'un à l'autre dans la direction circonférentielle du pneu ne se chevauchent pas.

3. Procédé de production de pneu pour un pneu comprenant une paire de parties de talon et une carcasse composée d'un ou plusieurs plis de carcasse chevauchant la paire de parties de talon en forme toroïdale, dans lequel
le procédé inclut un processus de formation de pneu brut : utilisant un noyau rigide de forme toroïdale doté d'une surface de formation de pneu qui forme une surface luminale du pneu sur sa surface externe et fixant de manière séquentielle des composants de pneu non vulcanisés, incluant des plis de carcasse, sur la surface de formation de pneu du noyau rigide pour former un pneu brut,
le processus de formation de pneu brut inclut un processus de formation de plis de carcasse : formant le pli de carcasse sur la surface de formation de pneu du noyau rigide,
le processus de formation de plis de carcasse inclut un procédé de fixation : fixant des éléments en forme de bande d'une largeur de bande allant de 1 à 10 mm, dans lesquels une pluralité de câbles de carcasse agencés parallèlement les uns aux autres sont recouverts de caoutchouc, de manière séquentielle dans la direction circonférentielle du pneu pour former un pli de carcasse composé des éléments en forme de bande agencés dans la direction circonférentielle du pneu, et
lors du processus de fixation, sur le plan équatorial du pneu, deux des éléments en forme de bande adjacents l'un à l'autre dans la direction circonférentielle du pneu sont fixés de telle sorte qu'ils soient en butée l'un contre l'autre au niveau des extrémités circonférentielles du pneu et **caractérisé en ce que** ;
au niveau des parties d'extrémités du pli de carcasse, deux des éléments en forme de bande adjacents l'un à l'autre dans la direction circonférentielle du pneu sont fixés de telle sorte qu'ils se chevauchent uniquement au niveau des parties en caoutchouc de ceux-ci.

4. Procédé de production de pneu selon la revendication 3, dans lequel, au niveau des parties d'extrémités du pli de carcasse, des câbles de carcasse de deux des éléments en forme de bande adjacents l'un à l'autre dans la direction circonférentielle du pneu ne peuvent pas se chevaucher.
